# EUROPÄISCHE PATENTANMELDUNG

(11) **EP 1 279 992 A2**
(43) Veröffentlichungstag der Anmeldung: **29.01.2003**
(21) Anmeldenummer: 02016750.8
(22) Anmeldetag: 26.07.2002
(51) Int. Cl.: G02C 7/02

(54) **Linse zum Einbau in eine Brillenfassung**

(30) Priorität: 28.07.2001 DE 10136954
(71) Anmelder: ESCHENBACH OPTIK GmbH + Co., 90409 Nürnberg (DE)
(72) Erfinder: Henkelmann, Klaus, 90552 Röthenbach (DE); Kohl, Peter, 90522 Oberasbach (DE)
(74) Vertreter: Mörtel & Höfner

(57) **Zusammenfassung**

Die Erfindung bezieht sich auf eine Linse (2), insbesondere eine Linse (2) mit hoher Brechkraft (Hyperokular), die zum Einbau in eine Brillenfassung vorgesehen ist. Die Linse (2) ist aus zumindest einem ersten und zumindest einem zweiten Bauteil (8,10) zusammengesetzt, von denen zumindest eines der Bauteile (8,10) auf ihrer dem anderen Bauteil (8,10) zugewandten Oberfläche (14,16) eine optisch wirksame Oberflächenstruktur (20, 26) aufweist. Gemäß der Erfindung ist vorgesehen, dass erstes und zweites Bauteil (8,10) zumindest im Bereich der Oberflächenstruktur (20, 26) voneinander beabstandet sind.

## Beschreibung

Die Erfindung bezieht sich auf eine Linse, insbesondere eine Linse mit hoher Brechkraft (Hyperokular), die zum Einbau in eine Brillenfassung vorgesehen ist.

Bei einem Hyperokular handelt es sich um eine asphärische Linse mit hoher Brechkraft, die hohe Vergrößerungen bei zugleich großem Sehfeld ermöglicht. Ein solches Hyperokular wird in eine normale Brillenfassung eingesetzt und dient als stark vergrößerndes optisches System zur Herstellung einer gewissen Sehfähigkeit bei Personen, deren Sehvermögen stark eingeschränkt ist. Ein wesentlicher Vorteil einer solchen Sehhilfe besteht nun darin, dass eine mit einem Hyperokular versehene Brille weniger auffallend ist als eine Fernrohroder Lupenbrille, die den Träger von weitem erkennbar als Sehbehinderten stigmatisiert.

Bei den bekannten Hyperokularen ist in der Mitte einer Trägerscheibe eine asphärische Linse mit hoher Brechkraft, beispielsweise zwischen 10 und 50 dpt, eingeformt. Diese Linse ist von einem optisch unwirksamen Randbereich umgeben, der durch entsprechende Bearbeitung (Randen) an die jeweilige Brillenfassung angepasst werden kann.

Um eine hohe Brechkraft zu ermöglichen, sind stark gekrümmte Linsenflächen erforderlich, die zu einer markanten Auswölbung führen und das Erscheinungsbild der Brille ungünstig beeinflussen. Da außerdem Hyperokulare aus Kosten- und Gewichtsgründen einlinsig sind, entstehen auf Grund der hohen Vergrößerungen relativ große und unvermeidliche Farbfehler.

Um eine hohe Brechkraft mit einer besonders dünnen Linse erzeugen zu können, ist es bekannt die Oberfläche eines transparenten Grundkörpers mit einer sogenannten diffraktiven Struktur zu versehen. Eine solche Linse für ein Brillenglas ist beispielsweise in der DE 41 10 614 A1 offenbart. Bei der dort auf die Oberfläche des transparenten Grundkörpers aufgebrachten diffraktiven Struktur handelt es sich um ringförmig um die optische Achse angeordnete Nuten, deren gegenseitiger Abstand mit wachsender Entfernung von der optischen Achse abnimmt. Diese Nuten sind in die Oberfläche des Grundkörpers mit einem materialabtragenden Verfahren, insbesondere einem Ätzverfahren oder einem Laserabtragsverfahren, eingebracht. Zur Farbkorrektur ist jede der Nuten mit einer treppenartigen Flanke versehen.

Um die diffraktive Struktur vor einer Beschädigung zu schützen, ist diese mit einer ebenfalls transparenten Schutzschicht versehen. Diese kann ein auf die Struktur aufgebrachter Lackauftrag oder eine auf den Grundkörper aufgekittete Deckscheibe sein. Dies ist insofern fertigungstechnisch aufwendig, als sichergestellt sein muss, dass der Lackauftrag oder der Kitt die Nuten vollständig, d. h. ohne Einschlüsse ausfüllt, ohne dass die diffraktive Struktur dabei beschädigt wird, so dass als Grundkörper nur relativ harte Werkstoffe, d. h. Glaswerkstoffe geeignet sind. Darüber hinaus ist mit dem Auffüllen der Nuten eine Verschlechterung der Abbildungseigenschaften der diffraktiven Struktur unvermeidbar.

Der Erfindung liegt nun die Aufgabe zugrunde, eine Linse mit hoher Brechkraft zum Einbauen in eine Brillenfassung anzugeben, die bei geringem Gewicht möglichst unauffällig ist, und bei der die Brechkraft oder die Korrektur der chromatischen Aberration mit einer hohen optischen Qualität durch eine Oberflächenstruktur erzeugt wird.

Die genannte Aufgabe wird gemäß der Erfindung gelöst mit einer Linse mit den Merkmalen des Patentanspruches 1. Da die optisch wirksame Oberflächenstruktur oder die optisch wirksamen Oberflächenstrukturen auf einer innenliegenden Oberfläche angeordnet sind, die von der gegenüberliegenden Oberfläche beabstandet ist, ist ein Schutz der Oberflächenstrukturen gegen Beschädigung, beispielsweise Zerkratzen, gewährleistet, ohne dass deren abbildende und/oder farbkorrigierende Eigenschaften durch den Stoffschluss mit einem Füll- oder Deckmaterial beeinträchtigt wird. Der durch den Abstand geschaffene Hohlraum kann mit Luft gefüllt sein, so dass die beiden Bauteile problemlos zusammengesetzt und an Stellen außerhalb der Oberflächenstruktur miteinander dauerhaft verbunden, beispielsweise verklebt werden können. Unter einer optisch wirksamen Oberflächenstruktur ist dabei im folgenden eine gezielte Strukturierung einer Oberfläche durch Ausbildung einer Vielzahl von gestuften Ringzonen zu verstehen, um auf diese Weise zumindest einen Teil der Brechkraft der Linse und/oder eine Korrektur der bei der Abbildung erzeugten Farbfehler herbeizuführen.

In einer vorteilhaften Ausgestaltung der Erfindung weist das erste Bauteil eine zumindest einen Teil der Brechkraft erzeugende Oberflächenstruktur auf. Durch diese Maßnahme ist es möglich, die Linse sehr dünn und damit leicht auszuführen. Dadurch werden einerseits der Tragekomfort erhöht und andererseits ein unauffälliges Erscheinungsbild erzielt.

In einer bevorzugten Ausgestaltung der Erfindung ist die Brechkraft erzeugende Oberflächenstruktur eine diffraktive Struktur, insbesondere eine diffraktive Struktur mit höherer Ordnung (MOD(multiorder diffractive)-Struktur).

Alternativ hierzu ist für einfache Anwendungsfälle als die Brechkraft bestimmende Oberflächenstruktur eine Fresnel-Struktur vorgesehen.

In einer weiteren vorteilhaften Ausgestaltung weist das andere Bauteil eine Oberflächenstruktur zur Korrektur der bei der Abbildung erzeugten Farbfehler auf. Durch diese Maßnahme kann die chromatische Aberration bei weiterhin kompaktem Aufbau wirkungsvoll verringert werden.

In einer weiteren bevorzugten Ausgestaltung der Erfindung sind die die Brechkraft erzeugende Oberflächenstruktur und eine die Farbkorrektur bewirkende Oberflächenstruktur sich überlagernd auf einer Oberfläche eines der Bauteile angeordnet. Dadurch muss nur auf ein Bauteil eine Oberflächenstruktur aufgebracht werden und die Herstellungskosten sind verringert.

In einer weiteren vorteilhaften Ausführungsform umfasst das erste Bauteil eine Vertiefung, in die das zweite Bauteil bündig mit dem Rand der Vertiefung eingesetzt ist. Dadurch wird die Montage erleichtert und störende Absätze- bzw. Stufen werden vermieden.

In einer weiteren vorteilhaften Ausgestaltung der Erfindung ist zumindest eine der außenliegenden Oberflächen der Linse mit einer Krümmung versehen. Dadurch kann die Brechkraft zusätzlich erhöht werden.

Vorzugsweise besteht zumindest das die Brechkraft erzeugende Oberflächenstruktur tragende Bauteil der Linse aus einem Polymer, insbesondere Polycarbonat PC oder Polymethylmetacrylat PMMA. Dies ermöglicht eine besonders einfache Herstellung des Bauteils und der Oberflächenstruktur in einem spritztechnischen Verfahren.

Zur weiteren Erläuterung der Erfindung wird auf das Ausführungsbeispiel der Zeichnung verwiesen. Es zeigen:
- Fig. 1: eine Linse gemäß der Erfindung in einer Draufsicht,
- Fig. 2: die Linse vor dem Zusammenbau der Bauteile in einem Querschnitt,
- Fig. 3: die Linse im zusammengebauten Zustand ebenfalls in einem Querschnitt,
- Fig. 4: einen vergrößerten Ausschnitt der Linse,
- Fig. 5 und 6: die Brechkraft erzeugende bzw. farbkorrigierende Oberflächenstruktur im Bereich der optischen Achse jeweils in einer vergrößerten Darstellung,
- Fig. 7: eine Ausführungsform, bei der die erste und zweite Oberflächenstruktur sich überlagernd auf einer einzigen Oberfläche angeordnet sind.
- Fig. 8: eine besonders einfache Ausführungsform der Erfindung, bei der zur Erzeugung der Brechkraft eine konventionelle Bikonvexlinse verwendet wird.

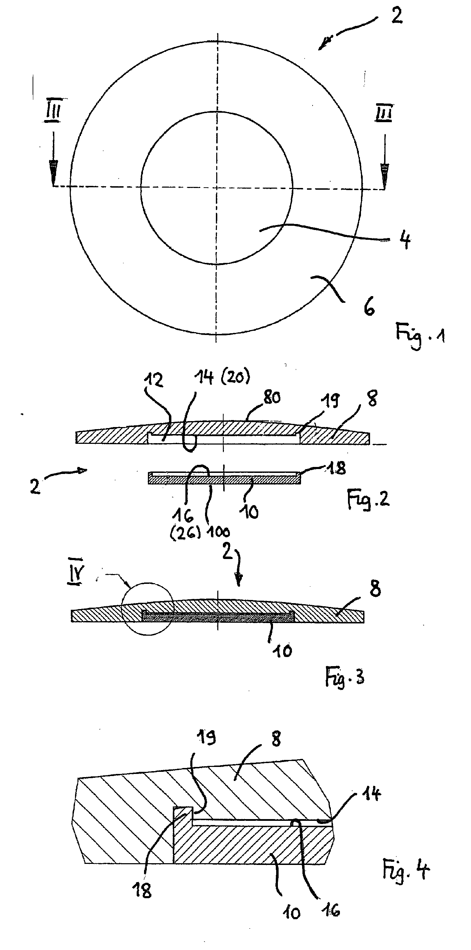

Gemäß Fig. 1 hat eine erfindungsgemäße Linse 2 als Rohling, d. h. vor dem Anpassen der Außenkontur an die jeweilige Brillenfassung, eine kreisscheibenförmige Gestalt mit einem Außendurchmesser von etwa 60mm und einer Dicke in der Mitte von etwa 4,5mm. Ein optisch wirksamer zentraler Bereich 4 mit einem Durchmesser von etwa 30mm ist von einem optisch unwirksamen Randbereich 6 umgeben, der zur Anpassung an die jeweilige Brillenfassung in herkömmlichen Brillenschleifautomaten bearbeitet (gerandet) werden kann.

Gemäß Fig. 2 und 3 ist die Linse 2 aus einem ersten und zweiten Bauteil 8 bzw. 10 zusammengesetzt. Das erste Bauteil 8 weist auf seiner, bei korrektem Einbau in die Brillenfassung dem Träger zugewandten Flachseite eine Vertiefung 12 auf, in die das zweite Bauteil 10 eingesetzt wird (Fig. 3), so dass es bündig, das heißt ohne Ausbildung eines Absatzes oder einer Stufe in der Vertiefung 12 einliegt.

Der Boden der Vertiefung 12 bildet eine ebene Oberfläche 14, die mit einer zeichnerisch nicht dargestellten optisch wirksamen Oberflächenstruktur 20 versehen ist, die ein erstes optisches Element bildet und eine hohe Brechkraft des ersten Bauteiles 8 bewirkt. Das zweite Bauteil 10 ist auf seiner dem ersten Bauteil 8 zugewandten ebenfalls ebenen Oberfläche 16 mit einer ein zweites optisches Element bildenden, in der Fig. ebenfalls nicht dargestellten optisch wirksamen Oberflächenstruktur 26 versehen, die zur Korrektur der bei der Abbildung erzeugten Farbfehler dient.

Die mit den Oberflächenstrukturen 20, 26 versehenen Oberflächen 14, 16 sind innenliegend, d.h. vor einer mechanischen Einwirkung von außen geschützt.

Die mit den Oberflächenstrukturen 20, 26 versehenen Bereiche der Oberflächen 14, 16 sind außerdem voneinander beabstandet angeordnet, so dass sich zwischen ihnen ein luftgefüllter Spalt derart ergibt, dass sich die einander gegenüberliegenden und jeweils die Oberflächenstruktur 20,26 tragenden Oberflächen 14,16 nach erfolgter Montage nicht berühren. Der sich dadurch ergebende Spalt oder Hohlraum ist nicht mit einem festen Körper ausgefüllt, sondern enthält allenfalls Luft, so dass sich das Licht zwischen den Oberflächenstrukturen 20,26 ungehindert ausbreiten kann. Das zweite Bauteil 10 ist hierzu an seinem Außenumfang mit einem im Ausführungsbeispiel ringförmig umlaufenden Überstand oder Kragen 18 versehen, der zur Erleichterung der Montage in eine am Umfang der Vertiefung 12 umlaufende Nut oder Rille 19 eingeführt wird. Um ein Berühren der Flachseiten 14 und 16 zu verhindern ist die Tiefe der Rille 19 kleiner als die Höhe des Überstandes 18, wie dies aus Fig. 4 deutlich hervorgeht.

Im Ausführungsbeispiel gemäß Fig. 1 bis 4 ist außerdem zu erkennen, dass die vom Träger abgewandte außenliegende Oberfläche 80 des ersten Bauteils 8 eine konvexe Krümmung aufweist, und beispielsweise eine Brechkraft von 4 dpt hat, die zusätzlich zu der Brechkraft erzeugenden innenliegenden Oberflächenstruktur 20 vergrößernd wirkt. Ergänzend hierzu kann abweichend vom dargestellten Ausführungsbeispiel auch die dem Träger zugewandte außenliegende Oberfläche 100 des zweiten Bauteils 10 mit einer konvexen Krümmung, beispielsweise entsprechend einer Brechkraft von 2 dpt, versehen sein um die Gesamtbrechkraft der zusammengesetzten Linse 2 zusätzlich zu erhöhen.

Grundsätzlich ist es auch möglich, die beiden Oberflächenstrukturen zu vertauschen, d. h. die Brechkraft erzeugende Oberflächenstruktur 20 auf dem zweiten Bauteil 10 und die farbkorrigierende Oberflächenstruktur 26 auf dem ersten Bauteil 8 anzuordnen.

Beide Bauteile 8, 10 bestehen aus einem Polymer, insbesondere Polymethylmetacrylat PMMA oder Polycarbonat PC, so dass sie jeweils in einem einzigen Verfahrenschritt gemeinsam mit der jeweiligen Oberflächenstruktur 20, 26 durch ein Spritzgießverfahren hergestellt werden können.

Alternativ hierzu kann das erste Bauteil 8 aus CR 39 bestehen, einem Werkstoff, der sich besonders gut zum Randen eignet. In diesem Fall ist es günstig, allenfalls die farbkorrigierende Oberflächenstruktur auf dem ersten Bauteil 8 anzubringen. Für das die Brechkraft erzeugende Oberflächenstruktur tragende Bauteil ist es jedoch von Vorteil, einen Werkstoff mit hoher Abbezahl, d.h. niedriger Dispersion zu wählen. Aus diesem Grunde ist es in dieser Ausführungsform zweckmäßig, zumindest die Brechkraft erzeugende Oberflächenstruktur auf dem zweiten Bauteil 10 anzubringen, und dieses aus Polymethylmetacrylat PMMA oder Polycarbonat PC zu fertigen.

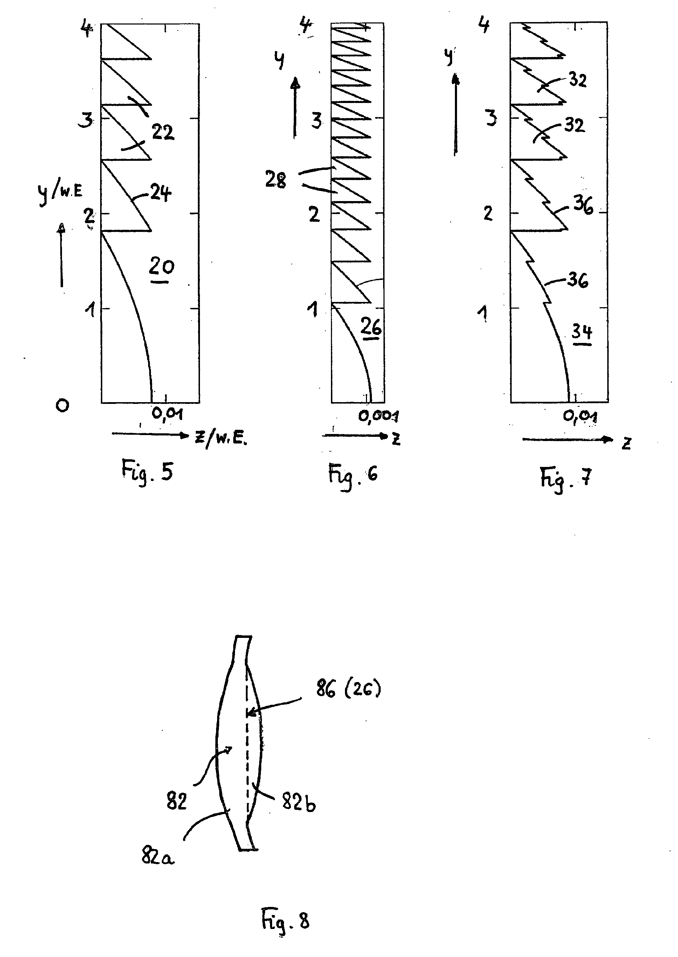

In Fig. 5 ist die Brechkraft erzeugende Oberflächenstruktur 20 in der Umgebung der optischen Achse (y = 0) vergrößert dargestellt. Im Diagramm ist die Höhe z der Zahnringe 22 gegen den Abstand y von der optischen Achse y=0 in willkürlichen Einheiten aufgetragen, wobei der Maßstab in der z-Achse gegenüber dem Maßstab in der y-Achse vergrößert ist, um die Struktur deutlicher darstellen zu können. Es handelt sich hierbei um eine konzentrisch zur optischen Achse verlaufende sägezahnartige Struktur, wobei die Breite eines jeden Zahnringes 22 zum Rand hin abnimmt. Die Höhe z der Zahnringe 22 liegt beispielsweise für eine Beugungsstruktur 21. Ordnung in der Größenordnung von etwa 0,023 mm. Die Flanken 24 der Zahnringe 22 sind zur Optimierung der Abbildungseigenschaften ähnlich einer Fresnel-Struktur mit einer konvexen Krümmung versehen. Dabei werden die Krümmungen der Flanken 24 in den einzelnen Zahnringen 22 so ausgelegt, dass die optischen Weglängen für die Lichtstrahlen, die aus einer von einem Zahnring 22 gebildeten Ringzone oder aus der zentralen kreischeibenförmigen Zone kommen, gleich sind und sich im Brennpunkt einen konstruktive Interferenz ergibt.

In der Fig. ist eine sogenannte MOD(multiorder diffractive)-Struktur dargestellt, bei der der optische Gangunterschied zwischen zwei benachbarten Zahnringen 22 ein Mehrfaches der Wellenlänge, im Ausführungsbeispiel das 21-fache der Konstruktionswellenlänge λ = 546,0740 nm, beträgt. Solche Linsen mit MOD-Strukturen sind beispielsweise aus dem Lehrbuch "Diffractive Optics for Industrial and Commercial Applications", ed. J. Turunen, F. Wyrowski, Akad. Verl., 1997, insbesondere Seite 98 ff, bekannt und lassen sich bei hinreichender Abbildungsqualität besonders kostengünstig herstellen.

Gemäß Fig. 6 besteht die zur Korrektur der Farbfehler vorgesehene Oberflächenstruktur 26 ebenfalls aus mehreren konzentrisch zueinander angeordneten sägezahnartigen Ringzonen. Die Höhe dieser Zahnringe 28 ist eine Größenordnung niedriger als die Höhe der Zahnringe 22 der Brechkraft erzeugenden Oberflächenstruktur 20 und liegt in der Größenordnung von etwa 1 µm, wenn es sich um eine diffraktive Struktur 1. Ordnung handelt. Grundsätzlich können jedoch zur Farbkorrektur auch diffraktive Strukturen höherer Ordnung eingesetzt werden, wobei sich Strukturen bis zur 3. Ordnung als besonders geeignet herausgestellt haben. Auch bei der farbkorrigierenden Oberflächenstruktur 26 sind die Flanken 30 der einzelnen Zahnringe 28 mit einer konvexen Krümmung versehen.

Gemäß Fig. 7 können die beiden Oberflächenstrukturen 20,26 durch Überlagerung auch auf einer gemeinsamen Fläche, beispielsweise auf dem ersten Bauteil, realisiert werden. Die Struktur der Zahnringe 32 einer solchen kombinierten Oberflächenstruktur 34 entsteht durch einfache Addition der in Fig. 5 und 6 dargestellten Strukturen, d.h. den Flanken 24 der Zahnringe 22 (Fig. 5) sind die Zahnringe 28 (Fig. 6) aufgeprägt, so dass sich die in Fig. 7 dargestellten "gezahnten" Flanken 36 ergeben. In diesem Fall dient das zweite Bauteil nur noch als Abdeckplatte zum Schutz der Oberflächenstruktur.

Eine Oberflächenstrukturierung gemäß Fig. 7 ist besonders dann von Vorteil, wenn das erste Bauteil aus CR 39 besteht, da in diesem Fall beide Oberflächenstrukturen auf dem aus einem Polymer bestehenden zweiten Bauteil angeordnet werden können und eine andernfalls zur Oberflächenstrukturierung erforderliche aufwendige Bearbeitung des ersten Bauteils entfällt.

Anstelle der zur Erzeugung der hohen Brechkraft verwendeten und in Fig. 5 dargestellten diffraktiven Struktur kann auch grundsätzlich eine refraktive Fresnel-Struktur verwendet werden, bei der die Abbildung durch Brechung erfolgt.

Alternativ zu den in Figuren 1 - 7 dargestellten besonders vorteilhaften Ausführungsformen, kann in einer vereinfachten Ausführungsform gemäß Fig. 8 die hohe Brechkraft auch durch eine Konvexlinse 82 erzeugt werden, die aus einer dicken, konventionellen und vorzugsweise asphärischen Bikonvexlinse besteht, und bei der lediglich deren chromatische Aberration durch eine diffraktive Oberflächenstruktur korrigiert ist. Die Konvexlinse 82 ist hierzu aus einem ersten und einem zweiten Bauteil 82a,b zusammengesetzt, wobei sich die diffraktive farbkorrigierende Oberflächenstruktur 26 an einer innenliegenden Oberfläche 86 befindet, die ebenfalls beabstandet vom gegenüberliegenden Bauteil 82a oder b angeordnet ist. Dadurch können bei konventionellen Hyperokularen Farbfehler vermindert werden, ohne dass es hierzu den Einsatz teurer und schwerer, aus mehreren Linsen zusammengesetzter Achromaten bedarf.

### Bezugszeichenliste

- 2: Linse
- 4: optisch wirksamer zentraler Bereich
- 6: Randbereich
- 8,82a: erstes Bauteil
- 10,82b: zweites Bauteil
- 12,14,86: innenliegende Oberflächen
- 16: Flachseite
- 18: Kragen
- 19: Rille
- 20,26,34: Brechkraft erzeugende, farbkorrigierende, kombinierte Oberflächenstruktur
- 22,28,32: Zahnring (erste, zweite, kombinierte Oberflächenstruktur
- 24,30,36: Flanken
- 82: Konvexlinse
- 80,100: außenliegende Oberfläche

## Patentansprüche

1. Linse (2) zum Einbau in eine Brillenfassung, insbesondere Linse (2) mit hoher Brechkraft (Hyperokular), die aus zumindest einem ersten und zumindest einem zweiten Bauteil (8,10) zusammengesetzt ist, von denen zumindest eines der Bauteile (8,10) auf ihrer dem anderen Bauteil (8,10) zugewandten Oberfläche (14,16) eine optisch wirksame Oberflächenstruktur (20, 26) aufweist,
**dadurch gekennzeichnet, dass**
erstes und zweites Bauteil (8,10) zumindest im Bereich der Oberflächenstruktur (20,26) voneinander beabstandet sind.

2. Linse nach Anspruch 1, bei der eines der Bauteile (8) eine zumindest einen Teil der Brechkraft erzeugende Oberflächenstruktur (20) aufweist.

3. Linse nach Anspruch 2, bei der als Brechkraft erzeugende Oberflächenstruktur (20) eine diffraktive Struktur vorgesehen ist.

4. Linse nach Anspruch 3, bei der die diffraktive Struktur eine MOD-Struktur ist.

5. Linse nach Anspruch 2, bei der als Brechkraft erzeugende Oberflächenstruktur (20) eine Fresnel-Struktur vorgesehen ist.

6. Linse nach einem der Ansprüche 2 bis 5, bei der das andere Bauteil (10) eine Oberflächenstruktur (26) zur Korrektur der bei der Abbildung erzeugten Farbfehler aufweist.

7. Linse nach einem der Ansprüche 2 bis 5, bei der die brechkrafterzeugende Oberflächenstruktur (20) und die die Farbkorrektur erzeugende Oberflächenstruktur (26) sich überlagernd auf der Oberfläche eines der Bauteile (8,10) angeordnet sind.

8. Linse nach einem der vorhergehenden Ansprüche, bei der eines der Bauteile (8) eine Vertiefung (12) umfasst, in die das zweite Bauteil (10) bündig mit dem Rand der Vertiefung (12) eingesetzt ist.

9. Linse nach einem der vorhergehenden Ansprüche, bei der zumindest eine ihrer außenliegenden Oberflächen (80,100) eine Krümmung aufweist.

10. Linse nach einem der vorhergehenden Ansprüche, bei der zumindest für das die Brechkraft erzeugende Oberflächenstruktur (20) tragende Bauteil als Werkstoff ein Polymer vorgesehen ist.
